# EUROPEAN PATENT APPLICATION

(11) **EP 4 749 342 A1**
(43) Date of publication of application: **27.05.2026**
(21) Application number: 25217593.0
(22) Date of filing: 21.11.2025
(51) Int. Cl.: G02B 6/44

(54) **MODULAR FURCATION HOUSING FOR FURCATING A FIBER OPTIC CABLE**

(30) Priority: 22.11.2024 US 202463723673 P
(71) Applicant: Corning Research And Development Corporation, Corning, New York 14831 (US)
(72) Inventor: CORPENING, Derek M., Hickory, NC 28601 (US); LANDIS, Austin Cody, Lincolnton, NC 28092 (US); SHINAULT, Dean Mason, Gastonia, NC 28056 (US); WEBB, Lee Alexander, Huntersville, NC 28078 (US); Tyma, Paul, Martin, Huntersville, NC 28078 (US)
(74) Representative: Reddie & Grose LLP

(57) **Abstract**

A furcation housing for forming a furcation in a fiber optic cable carrying a plurality of optical fibers is disclosed. The furcation housing has a modular construction including a plurality of separate furcation housing components releasably connectable to form the furcation housing. At least two of the plurality of furcation housing components connect to each other through a snap fit connection. The furcation housing components include a base, lid, at last one tube insert, and optionally one or more expansion modules that allow the size of the furcation housing to be scaled with the number of optical fibers. A kit for making the modular furcation housing from the furcation housing components, a method of assembling the components to form the furcation housing, and a method of forming a furcation in a fiber optic cable using the modular furcation housing are also disclosed.

## Description

### Priority Application

This application claims the benefit of priority of U.S. Provisional Application Serial No. 63/723,673 filed on November 22, 2024, the content of which is relied upon and incorporated herein by reference in its entirety.

### Technical Field

This disclosure relates generally to fiber optic connectivity, and more particularly to a modular furcation housing formed from a plurality of snap fit housing components for furcating a fiber optic cable. The disclosure also relates to a method of making a furcation housing from the plurality of snap fit housing components and a method of furcating a fiber optic cable using the modular furcation housing.

### Background

Optical fibers are useful in a wide variety of applications, including the telecommunications industry for voice, video, and data transmissions. The benefits of optical fiber are well known and include higher signal-to-noise ratios and increased bandwidth compared to conventional copper-based transmission technologies. To meet modern demands for increased bandwidth and improved performance, telecommunication networks are increasingly providing optical fiber connectivity closer to end subscribers. These initiatives include fiber-to-the-node (FTTN), fiber-to-the-premises (FTTP), fiber-to-the-home (FTTH), and the like (generally described as FTTx).

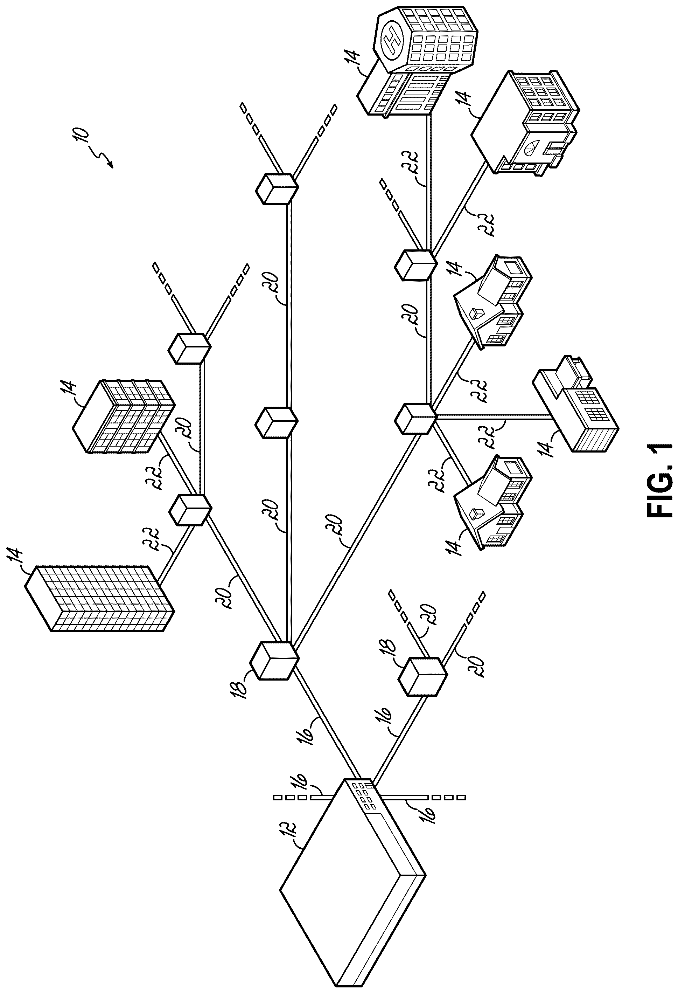

In an FTTx network, fiber optic cables are used to carry optical signals to various distribution points and, in some cases, all the way to end subscribers. For example, Fig. 1 is a schematic diagram of an exemplary FTTx network 10 that distributes optical signals generated at a switching point 12 (e.g., a central office of a network provider) to subscriber premises 14. Optical line terminals (OLTs; not shown) at the switching point 12 convert electrical signals to optical signals. Fiber optic feeder cables 16 then carry the optical signals to various local convergence points 18, which act as locations for splicing and making cross-connections and interconnections. The local convergence points 18 often include splitters to enable any given optical fiber in the fiber optic feeder cable 16 to serve multiple subscriber premises 14. As a result, the optical signals are "branched out" from the optical fibers of the fiber optic feeder cables 16 to optical fibers of distribution cables 20 that exit the local convergence points 18.

At network access points closer to the subscriber premises 14, some or all of the optical fibers in the distribution cables 20 may be accessed to connect to one or more subscriber premises 14. Drop cables 22 extend from the network access points to the subscriber premises 14, which may be single-dwelling units (SDU), multi-dwelling units (MDU), businesses, and/or other facilities or buildings. A conversion of optical signals back to electrical signals may occur at the network access points or at the subscriber premises 14.

There are many different network architectures, and the various tasks required to distribute optical signals (e.g., splitting, splicing, routing, connecting subscribers) can occur at several locations. Regardless of whether a location is considered a local convergence point, network access point, subscriber premise, or something else, fiber optic equipment is used to house components that carry out one or more of the tasks. The term "terminal" will be used in this disclosure to generically refer to such equipment, which may include fiber distribution hubs (FDH), cabinets, closures, network interface devices, distributor frames, etc. At various terminals in the optical fiber network 10, the incoming optical signal may be transmitted through a high fiber count cable, i.e., the fiber optic cable includes a large number of optical fibers within an outer sheath or jacket, with each optical fiber configured to carry an optical signal. Depending on the particular application, there is often a need to split or branch the high fiber count cable into a plurality of lower fiber-count cables or breakout legs, which are then optically coupled to other components of the fiber optic network, such as various optical fiber modules, devices, cables (e.g., distribution cables), etc.

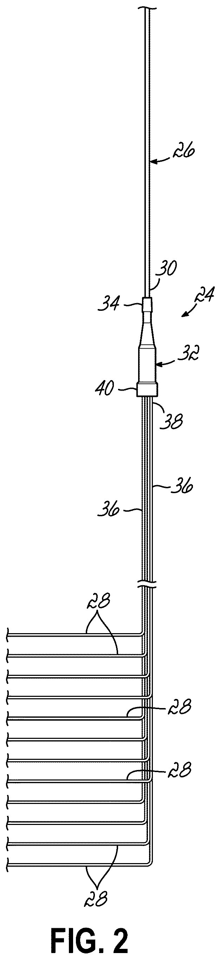

This process of branching a high fiber count cable into a plurality of breakout legs is commonly referred to as furcating the fiber optic cable and the branch point is commonly referred to as a furcation. By way of example, Fig. 2 schematically illustrates a furcation 24 where a high fiber count fiber optic cable 26 is branched into a plurality of lower fiber count breakout legs 28. In this regard, an end 30 of the fiber optic cable 26 is inserted into a furcation housing 32 at a cable end 34 thereof. Within the furcation housing 32, the plurality of optical fibers in the fiber optic cable 26 are divided into groups of optical fibers corresponding to the number of breakout legs 28 in the furcation 24.

The optical fibers in each group of fibers are then inserted through respective fanout tubes 36 that define, at least in part, the breakout legs 28 of the furcation 24. An end 38 of each of the fanout tubes 36 is received in a breakout end 40 of the furcation housing 32. Epoxy may then be inserted into the furcation housing 32 to secure the fiber optic cable 26, optical fibers thereof, and breakout legs 28 together at the furcation housing 32. Additionally, heat shrink material is often used at the junction between the fiber optic cable 26 and the cable end 34 of the furcation housing 32. Heat shrink material may also be used to consolidate the plurality of fanout tubes 36 at the breakout end 40 of the furcation housing 32 and/or at the junction between the fanout tubes 36 and the breakout end 40 of the furcation housing 32. When the furcation 24 is completed, the breakout legs 28 may be routed to their desired and potentially different locations in the terminals of the fiber optic network 10.

While the processes and components for making furcations in fiber optic cables are satisfactory for their intended purpose, there remain drawbacks for manufacturers and installers. For example, components for carrying out furcations are typically sold in a kit instead of as individual parts. However, the furcation housing components needed to perform the furcation depend on the various cable and hardware combinations for which the furcation is being formed. For example, the furcation housing components may have to be used with central tube cables (e.g., Ribbon riser/plenum, UltraRibbon riser/plenum, freedm Ribbon/UltraRibbon, and SST Ribbon/UltraRibbon) and RocketRibbon cables. The furcation kits may also have to be used for connection to different types of network devices with cable size limitations, fiber count limitations, and/or connector type limitations. Furthermore, the furcation kits may have to accommodate different split requirements, routing paths, and leg lengths.

For this reason, a supplier typically offers a selection of kits to choose from in order to accommodate the possible combinations technicians may experience when furcating a fiber optic cable. For example, some suppliers may offer upwards of ten different furcation kits, each having different product numbers and stock requirements that must be tracked and managed for inventory. The multiple offerings may also cause some confusion as to which furcation kit applies to the particular fiber optic cable in which a furcation is desired. This can lead to the wrong furcation kit being selected and brought on site, which can be frustrating.

In addition, furcation kits may include many parts, and sometimes redundant parts, for forming the furcation in the fiber optic cable. For example, a typical furcation kit may include several branching components (e.g., transport funnels and vinyl tubing that collectively form the furcation housings, and fanout tubes), protective components (e.g., braided tubing and heat shrinks), and cable blocking and sealing components (adhesive foil, syringes, sealants, and silicone and/or epoxy uraseal). Moreover, because each furcation kit may be applicable to several different cable/hardware combinations, installation instructions are not standardized and intuitive, leading to errors in the furcation process. Furthermore, some network environments have fire suppression systems that prohibit the use of heat guns (and thus heat shrinks) and other devices that present a safety concern.

In addition to the above, furcation components have not kept pace with the increased fiber density provided by more recent fiber optic cables. By way of example, more recent fiber optic cables are configured to carry nearly 7,000 optical fibers arranged in subunits that carry over 400 optical fibers per subunit. Current furcation housings, for example, are not designed, and have not been redesigned, to accommodate such high fiber count fiber optic cables in an organized and formalistic approach.

Manufacturers continually strive to improve fiber optic cable components and processes, and, in view of the above drawbacks, there is a need in the telecommunication industry to improve the components and processes for furcating a fiber optic cable in a fiber optic network. More particularly, there is a need for furcation components that are designed to accommodate a wider range of cable and hardware combinations thereby reducing or minimizing the number of kits and parts needed to make furcations. There is also a need for furcation components that are designed to accommodate the high fiber count configurations of more recent fiber optic cables.

### Summary

The invention is defined in the independent claim. Optional features are set out in the dependent claims.

In one aspect of the disclosure, a furcation housing for forming a furcation in a fiber optic cable carrying a plurality of optical fibers is disclosed. The furcation housing has a modular construction including a plurality of separate furcation housing components releasably connectable to form the furcation housing. At least two of the plurality of furcation housing components connect to each other through a snap fit connection. In this way, a furcation housing may be formed from components in a tool-less manner.

Optionally, the plurality of furcation housing components may include a base and another furcation housing component of the plurality of furcation housing components releasably connectable to the base through the snap fit connection. The base may include a rear opening for receiving the fiber optic cable, a front opening for receiving a plurality of fanout tubes configured to receive the optical fibers of the fiber optic cable, and an interior space between the front and rear openings. The base has a generally open top such that the interior space of the base is externally accessible when the another furcation housing component is disengaged from the base.

Optionally, the plurality of furcation housing components may further include at least one tube insert positionable in the interior space of the base adjacent the front opening. The at least one tube insert may include a plurality of bores configured to receive an end of a respective one of the plurality of fanout tubes. Optionally, each of the plurality of bores in the at least one tube insert may include a slot extending along a length of the bore to provide access to the bore from external the at least one tube insert. Additionally, optionally, each of the plurality of bores may include at least one friction-enhancing element configured to increase a holding force of the plurality of fanout tubes in the respective plurality of bores of the at least one tube insert.

Optionally, the plurality of bores in the at least one tube insert may be arranged in a rectangular array of rows and columns. For example, the rectangular array may have no more than two rows in order to allow access to the bores. When the at least one tube insert is positioned in the interior space of the base, the base closes off the plurality of bores in a first row of the tube insert. Moreover, when the another furcation housing component is connected to the base, the another furcation housing component closes off the plurality of bores in a second row of the at least one tube insert. Optionally, a portion of the base that closes off the plurality of bores in the first row of the at least one tube insert may include at least one friction-enhancing element configured to increase the holding force of the plurality of fanout tubes in the respective plurality of bores in the first row. Similarly, a portion of the another furcation housing component that closes off the plurality of bores in the second row of the at least one tube insert may include at least one friction-enhancing element configured to increase the holding force of the plurality of fanout tubes in the respective plurality of bores in the second row.

Optionally, the at least one tube insert may include a pair of support rails for supporting the at least one tube insert on the base of the furcation housing, such as in the interior space thereof. Optionally, when the another furcation housing component is releasable connected to the base, the another furcation housing component clamps the tube insert within the interior space of the base to restrict its motion. However, when the another furcation housing component is disengaged from the base, the at least one tube insert may be removable from the interior space of the base.

Optionally, the base may include a bottom wall, a rear end wall defining the rear opening for receiving at least a portion of the fiber optic cable, a front end wall defining the front opening for receiving at least a portion of the plurality of furcation tubes, and a pair of side walls extending between the front end wall and the rear end wall. The front end wall, rear end wall, and pair of side walls extends from the bottom wall to define the interior space.

Optionally, each of the pair of side walls may include an insert notch adjacent the front end wall, wherein the insert notch is configured to receive a portion of the at least one tube insert (e.g., a support rail thereof) for supporting the at least one tube insert on the base. Optionally, the insert notch may include a rib extending from the bottom wall and an opening in the respective side wall above the rib and open to a top of the respective side wall. Additionally, optionally, each of the pair of side walls may include at least one tool notch including an opening in the respective side wall that is open to the top of the respective side wall.

Optionally, each of the pair of side walls may include a connection groove in the side wall and open to the top of the side wall. The connection groove may include at least one snap fit feature that forms part of the snap fit connection between the base and the another furcation housing component. Optionally, the at least one snap fit feature associated with the connection groove may include at least one of a snap fit projection or a snap fit recess. More particularly, the connection groove may include one or more projections for making the snap fit connection with the another furcation housing component. Optionally, the connection groove may be positioned in the respective side walls between the insert notch and the rear end wall, and more particularly between the two tool notches in the side walls.

Optionally, the another furcation housing component may include a lid. Thus, the furcation housing includes a base, a lid, and at least one tube insert. Optionally, the lid may include a lid body defining a front edge, a rear edge, a pair of side edges, an upper surface, and a lower surface. Optionally, a pair of connection tongues may extend from the lower surface of the lid body adjacent respective side edges of the lid body. The pair of connection tongues is configured to be received in respective connection grooves in the base. Optionally, each of the pair of connection tongues may include at least one snap fit feature that forms part of the snap fit connection between the base and the lid. Optionally, the at least one snap fit feature associated with the connection tongue may include at least one of a snap fit projection or a snap fit recess. More particularly, the connection tongue may include at least one snap fit recess. Optionally, the snap fit recess includes an inlet groove, a deflection element, and a projection seat.

Optionally, the another furcation housing component may include at least one expansion module. Optionally, the at least one expansion module may include a bottom wall, a rear end wall, a front end wall, and a pair of side walls extending between the front end wall and the rear end wall. The front end wall, rear end wall, and pair of side walls define an interior space. Optionally, each of the pair of side walls may include an insert notch adjacent the front end wall, wherein the insert notch is configured to receive a portion of another at least one tube insert for supporting the another at least one tube insert on the base. Optionally, the insert notch may include a rib extending from the bottom wall and an opening in the respective side wall above the rib and open to the top of the respective side wall. Additionally, optionally, each of the pair of side walls may include at least one tool notch including an opening in the respective side wall that is open to the top of the respective side wall.

Optionally, each of the pair of side walls of the at least one expansion module may include a connection groove in the side wall open to the top of the side wall. Optionally, the connection groove may include at least one snap fit feature that forms part of the snap fit connection between the at least one expansion module and another furcation housing component, such as the lid or another expansion module. Optionally, the at least one snap fit feature associated with the connection groove may include at least one of a snap fit projection or a snap fit recess. Optionally, the connection groove may be positioned in the respective side walls between the insert notch and the rear end wall, and more particularly between the two tool notches in the side wall.

Optionally, the at least one expansion module may be modular and include a module body that includes the bottom wall, front end wall and the two side walls, and a rear cap releasably connected to the module body through a snap fit connection, where the rear cap includes the rear end wall of the expansion module. Optionally, a wide range of rear caps may be provided where different end caps have different sizes of rear openings for accommodating different sizes of fiber optic cables.

Optionally, the at least one expansion module may include a plurality of expansion modules arranged in a stacked configuration. By way of example, the furcation housing may include a base and 2, 3, 4 or more expansion modules one stacked on top of the other. The top most expansion module may then be configured to releasably connect to the lid in a snap fit manner for closing off the furcation housing.

In another aspect of the disclosure, a fiber optic cable assembly is disclosed. The fiber optic cable assembly includes a fiber optic cable having a furcation formed therein and where the furcation includes a furcation housing according to the first aspect described above. Optionally, the furcation may further include a plurality of fanout tubes extending from the furcation housing and defining a plurality of breakout legs. Optionally, the furcation may further include a plurality of fiber optic connectors terminating the optical fibers in the fanout tubes.

In another aspect according to the disclosure, a kit for forming a furcation in a fiber optic cable is disclosed. The kit includes a plurality of furcation housing components connectable to form a furcation housing including at least one base, at least one lid, a plurality of expansion modules, and a plurality of tube inserts.

Optionally, each of the plurality of expansion modules in the kit may further include a plurality of module bodies and a plurality of rear caps releasably connectable to each of the plurality of module bodies in a snap fit connection. Optionally, the at least one base may include a plurality of bases and the at least one lid may include a plurality of lids. In this way, multiple furcation housings may be formed from a single kit.

In another aspect of the disclosure, a method of assembling a furcation housing from a plurality of furcation housing components is disclosed. The method includes providing a base, providing another furcation housing component, positioning at least one tube insert within an interior space of the base, and releasably connecting the another furcation housing component to the base through a snap fit connection.

Optionally, the another furcation housing component may be a lid and releasably connecting the another furcation housing component to the base may include releasably connecting the lid to the base by the snap fit connection. Alternatively, the another furcation housing component may be at least one expansion module and releasably connecting the another furcation housing component to the base may include releasably connecting the at least one expansion module to the base by the snap fit connection. Optionally, the at least one expansion module may include a plurality of expansion modules and releasably connecting the at least one expansion module to the base may include releasably connecting the plurality of expansion modules to the base in a stacked configuration. The method may then further include releasably connecting the lid to the at least one expansion module in a snap fit connection.

In yet another aspect of the disclosure, a method of furcating a fiber optic cable carrying a plurality of optical fibers is disclosed. The method includes stripping an end of the fiber optic cable, separating the plurality of optical fibers into a plurality of groups of optical fibers, inserting each of the plurality of groups of optical fibers into a respective bore of at least one tube insert of a furcation housing via a slot associated with the respective bore, inserting each of the plurality of groups of optical fibers into a respective one of a plurality of fanout tubes, inserting an end of each of the plurality of fanout tubes into a respective one of the plurality of bores in the at least one tube insert, attaching a base of the furcation housing to the fiber optic cable, inserting the at least one tube insert in the base, and attaching another furcation housing component to the base through a snap fit connection.

Optionally, the another furcation housing component may be a lid and releasably connecting the another furcation housing component to the base may include releasably connecting the lid to the base by the snap fit connection. Alternatively the another furcation housing component may be at least one expansion module and releasably connecting the another furcation housing component to the base may include releasably connecting the at least one expansion module to the base by the snap fit connection. Optionally, the at least one expansion module may include a plurality of expansion modules and releasably connecting the at least one expansion module to the base may include releasably connecting the plurality of expansion modules to the base in a stacked configuration. The method may then further include releasably connecting the lid to the at least one expansion module in a snap fit connection.

Additional features and advantages will be set forth in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a schematic diagram of an exemplary FTTx network.
Fig. 2 is a schematic diagram of a furcation in a fiber optic cable.
Fig. 3 is a fiber optic cable assembly with a furcation according to an embodiment of the disclosure.
Fig. 4 is an exemplary cross-sectional view of a fiber optic cable in which a furcation is formed according to an embodiment of the disclosure.
Fig. 5 is an assembled perspective view of a modular furcation housing according to an embodiment of the disclosure.
Fig. 6 is a disassembled perspective view of the modular furcation housing shown in Fig. 5.
Fig. 7 is an enlarged perspective view of a base of the modular furcation housing in accordance with an embodiment of the disclosure.
Fig. 8 is an enlarged perspective view of the base shown in Fig. 7 with a part of a side wall removed.
Fig. 9 is an enlarged perspective view of a lid of the modular furcation housing in accordance with an embodiment of the disclosure.
Fig. 10 is a perspective view of a base and lid showing an alternative snap fit connection.
Fig. 11 is an enlarged perspective view of a tube insert of the modular furcation housing in accordance with an embodiment of the disclosure.
Fig. 12 is a disassembled perspective view of a modular furcation housing according to an embodiment of the disclosure that includes an expansion module.
Fig. 13 is an assembled perspective view of a modular furcation housing according to an embodiment of the disclosure that includes two expansion modules.
Fig. 14 is a disassembled enlarged perspective view of an expansion module according to an embodiment of the disclosure.
Fig. 15 is a disassembled perspective view of a furcation kit illustrating a plurality of furcation housing components.
Fig. 16 is an assembled perspective view of a modular furcation housing according to an embodiment of the disclosure.
Fig. 17 is a disassembled perspective view of the modular furcation housing shown in Fig. 16.

### Detailed Description

Various embodiments will be further clarified by examples in the description below. In general, the description relates to a furcation housing for use in forming a furcation in a high fiber count fiber optic cable. The furcation housing has a modular design consisting of a select number of furcation housing components that releasably connect together to form the furcation housing. In its simplest configuration, the furcation housing components may include a base, a lid, and at least one tube insert configured to receive fanout tubes that are connected together in a tool-less, snap fit manner to form the furcation housing. Designing the furcation housing to be modular also allows the furcation housing to be scalable so as to accommodate additional optical fibers within the furcation housing. In this regard, the furcation housing components may include the base, the lid, one or more stackable expansion modules disposed between the base and lid, and additional tube inserts to accommodate additional fanout tubes for the furcation. Thus, the furcation housing may be selectively sized to accommodate a wide range of optical fiber counts, including those of more recent high fiber count fiber optic cables.

Moreover, because a wide range of furcation housings can be made from just a few types of furcation housing components (e.g., base, lid, optional expansion modules, and tube inserts), manufacturers can make available a fewer number of kits to installers for forming a furcation in a fiber optic cable. And because the housing components connect together in a repeatable and intuitive manner, instructions are simplified and technicians are less likely to make mistakes in forming the furcation in the fiber optic cable, which reduces frustration, time delays, and costs.

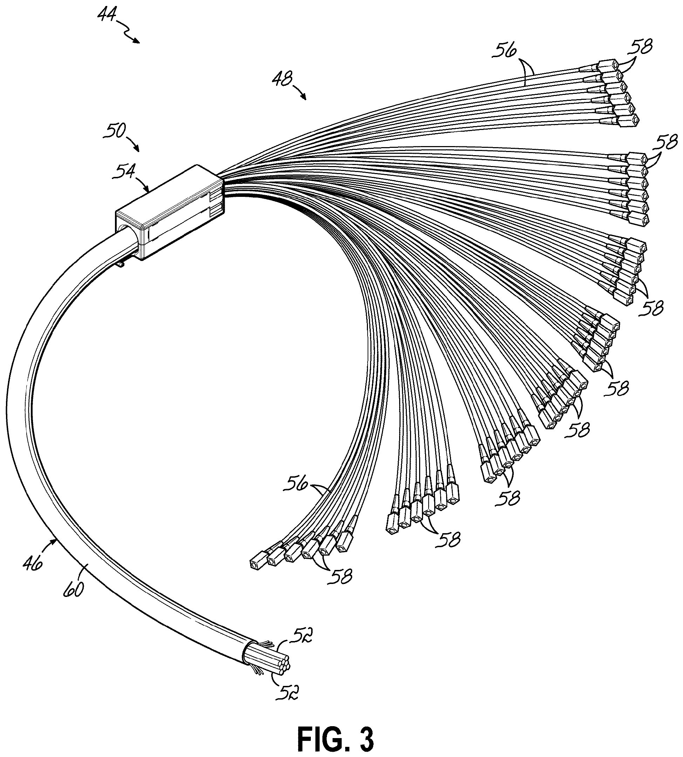

Now referring to Fig. 3, a cable assembly 44 in accordance with aspects of the disclosure is illustrated. The cable assembly 44 includes a high fiber count fiber optic cable 46 having a first end 48 and a second end (not shown). The first end 48 includes a furcation 50 for dividing the optical fibers 52 carried by the fiber optic cable 46. The furcation 50 includes a furcation housing 54, a plurality of fanout tubes 56, and a plurality of fiber optic connectors 58 that terminate the optical fibers 52 being carried by the fiber optic cable 46. While the cable assembly 44 illustrated in Fig. 3 shows only the first end 48 including a furcation 50, it should be understood that in one embodiment, the second end of the cable assembly 44 may also include a furcation (not shown) similar to furcation 50 at the first end 48. Alternatively, however, the second end of the cable assembly 44 may have a different configuration.

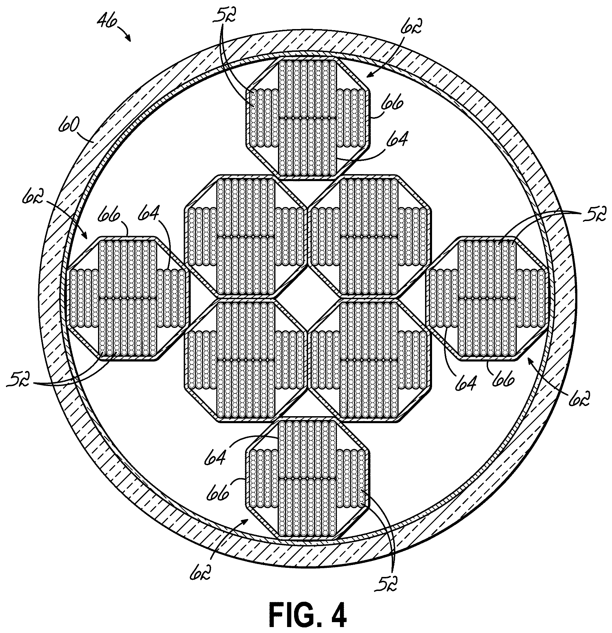

The fiber optic cable 46 is well known in the fiber optics industry and includes a plurality of optical fibers 52 surrounded by an outer protective sheath or jacket 60 ("outer jacket 60"). The optical fibers 52 may be bare optical fibers or may be assemblies having an outer protective jacket. In an exemplary embodiment, the optical fibers 52 may be configured as ribbons. Fig. 4 illustrates an exemplary high fiber count fiber optic cable 46 in accordance with an embodiment of the disclosure. The fiber optic cable 46 includes a plurality of routable subunits 62, and each routable subunit 62 is configured to carry a pre-selected number of optical fibers 52. By way of example and without limitation, each routable subunit 62 may be configured to carry 288 optical fibers 52. It should be recognized, however, that more or less optical fibers 52 may be carried by each of the routable subunits 62. Although the fiber optic cable 46 is shown as including eight routable subunits 62, the number of subunits 62 may be more or less than this number in alternative embodiments. The routable subunits 62 may be arranged within the outer jacket 60, as is generally known in the industry.

The optical fibers 52 in the routable subunits 62 may be configured as a plurality of fiber optic ribbons 64 ("ribbons 64"). Each ribbon 64 includes a plurality of the optical fibers 52 arranged in a generally side-by-side manner (e.g., a linear array, as shown, or a rolled/folded array). Such ribbons are generally known in the art and thus will not be further described herein. In one embodiment, for example, each ribbon 64 may be configured to include twelve optical fibers 52. It should be recognized, however, that each ribbon 64 may include more or less optical fibers 52 in various alternative embodiments. The ribbons 64 of a routable subunit 62 may be arranged within a subunit sheath 66 ("subunit jacket 66"), which may be a thin layer of material that has been extruded over the ribbons 64. The fiber optic cable 46 of the cable assembly 44 may have a length up to several thousands of meters (m), and lengths up to 300 m are common. However, other lengths for fiber optic cable 46, such as between 0.5 m and about 50 m may also be possible. Shorter cable assemblies 44 may be described as "patchcords," which are often used for signal routing between receptacles in network equipment separated by relative short distances (e.g., within a terminal or within a data center).

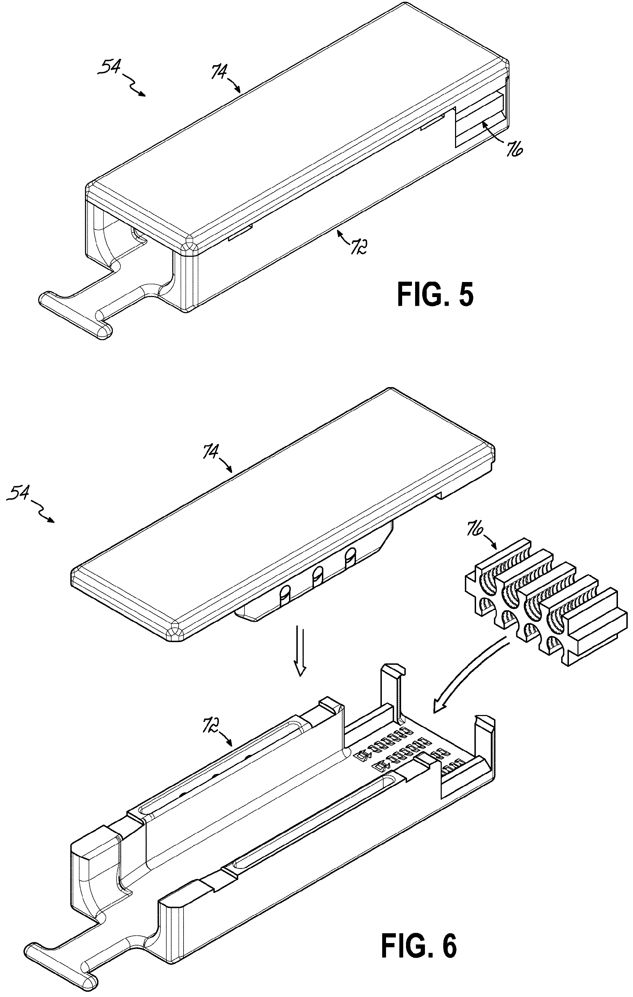

Figs. 5-10 illustrate a furcation housing 54 in accordance with an embodiment of the disclosure. The furcation housing 54 is modular in its construction and, in its most basic embodiment, includes three standard furcation housing components that connect together to form the furcation housing 54. For ease of assembly, and as discussed in more detail below, the furcation housing components are configured to be connected in a tool-less manner using, for example, one or more snap fit connections. As illustrated in Figs. 5 and 6, in one embodiment the three standard furcation housing components that form the furcation housing 54 may include a base 72, a lid 74 releasably connectable to the base 72, and at least one tube insert 76 carried by the base 72.

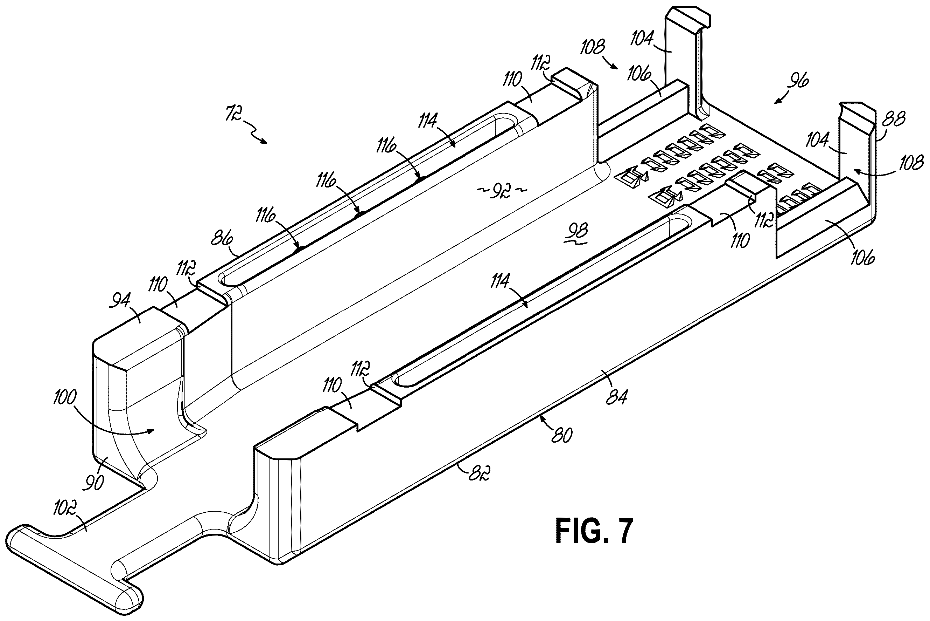

As best illustrated in Fig. 7, the base 72 includes a base body 80 having at least a bottom wall 82, a first side wall 84, a second side wall 86, a front end wall 88, and a rear end wall 90 that generally define an interior space 92. The base body 80 is generally open along a top 94, which as explained below, is ultimately closed off by the lid 74. In one embodiment, the base body 80 may be generally rectangular in shape; however, that is merely exemplary and the base body 80 may have other shapes. In one embodiment, the front end wall 88 may include a generally U-shaped opening 96 that provides access to the interior space 92 of the base body 80 from a front of the base 72. In one embodiment, the opening 96 may extend from an upper surface 98 of the bottom wall 82 to the top 94 so as to be open along the top 94 of the base body 80. Additionally, in one embodiment, the opening 96 may have a width that is substantially equal to the width of the interior space 92, i.e., the remaining portion of the front end wall 88 on opposed sides of the opening 96 may be approximately equal to the width of the side walls 84, 86. In an alternative embodiment, however, the opening 96 may have a width less than the width of the interior space 92. In another alternative embodiment, the height of the opening 96 may be less than the height of the side walls 84, 86. As will be described in more detail below, the opening 96 in the front end wall 88 makes the fanout tube receiving bores of the tube insert 76 accessible from the external environment of the furcation housing 54.

In one embodiment, and in a similar manner, the rear end wall 90 may include a generally U-shaped opening 100 that provides access to the interior space 92 of the base body 80 from a rear of the base 72. In one embodiment, the opening 100 may extend from an upper surface 98 of the bottom wall 82 to the top 94 so as to be open along the top 94 of the base body 80. Additionally, in one embodiment, the opening 100 may have a width that is substantially equal to the width of the interior space 92, i.e., the remaining portion of the rear end wall 90 on opposed sides of the opening 100 may be approximately equal to the width of the side walls 84, 86. In an alternative embodiment, however, the opening 100 may have a width less than the width of the interior space 92. In another alternative embodiment, the height of the opening 100 may be less than the height of the side walls 84, 86. As will be described in more detail below, the opening 100 in the rear end wall 90 is configured to receive at least part of the fiber optic cable 46 from the external environment of the furcation housing 54.

In one embodiment, the base 72 may include at least one strain-relief element 102 (e.g., a T-bar or the like) adjacent the opening 100 in the rear end wall 90 so as to extend from the rear end wall 90. In one embodiment, the strain-relief element 102 may be an extension of the bottom wall 82 from the rear of the base 72. Other locations of the strain-relief element 102, however, may also be possible, such as extending from one or both of the side walls 84, 86 at the rear of the base 72. The strain-relief element 102 is configured to allow installers to connect the fiber optic cable 46 to the furcation housing 54 so as to limit the propagation of tension forces on the cable 46 through the furcation housing 54. For example, installers may connect the fiber optic cable 46 to the strain-relief element 102 with various ties, tapes, bands, clips, clamps, etc. In this way, pulls and tugs on the fiber optic cable 46 prevent or limit damage to the optical fibers 52 in or beyond the furcation housing 54.

Turning now to the side walls 84, 86 of the base body 80, each of the side walls 84, 86 may be substantially the same in its construction and thus a description of one of the side walls 84 will suffice as an adequate description of the other side wall 86. The side wall 84 may be generally solid with a width that may be generally constant or vary slightly along its length and extend generally from the front end wall 88 to the rear end wall 90. In one embodiment, the edges of the side walls 84, 86 may define one or both of the front end wall 88 and the rear end wall 90. The height of the side wall 84 may be generally constant but for some features that will be discussed in more detail below. The side wall 84 includes a generally U-shaped insert notch 104 adjacent the front end wall 88. As explained in more detail below, the insert notch 104 is configured to receive a portion of the tube insert 76 and support the tube insert 76 within the interior space 92 of the base 72 of the furcation housing 54.

In one embodiment, the insert notch 104 includes a rib 106 extending upwardly from the bottom wall 82 for a height less than the height of the side wall and a U-shaped opening 108 that extends from the rib 106 to the top 94 of the base body 80 so as to be open at the top of the side wall 84. In one embodiment, the rib 106 has a height less than half the height and preferably less than about a third of the height of the side wall 84. The rib 106 may also have a width less than the width of the side wall 84, though this is merely exemplary. Additionally, the opening 108 (and rib 106) may have a length less than the length of the furcation housing 54 and may generally correspond to the length of the tube insert 76. In various embodiments, for example, the length of the opening 108 of the insert notch 104 may be between about 10% and about 30% of the length of the furcation housing 54.

The side wall 84 may also include at least one tool notch 110 between the insert notch 104 and the rear end wall 90 of the base body 80. The at least one tool notch 110 includes an opening 112 that is open to the top 94 of the side wall 84 and extends downwardly toward the bottom wall 82 a small amount, i.e., the height of the opening 112 is considerably less than the height of the side wall 84 (e.g., less than 10%). The at least one tool notch 110 is configured to receive a technician's finger or tool (not shown) that allows the technician to disassemble the furcation housing 54 (e.g., remove the lid 74 from the base 72). In one embodiment, the side wall 84 includes two tool notches 110, one adjacent the insert notch 104 and one adjacent the rear end wall 90 of the base body 80. However, fewer or additional tool notches 110 may be formed in the side wall 84 as well.

Furthermore, the side wall 84 includes a connection groove 114 for connecting the base 72 to another furcation housing component, such as the lid 74 in a tool-less, snap fit manner. In one embodiment, the connection groove 114 is open to the top 94 of the side wall 84 and extends downwardly toward the bottom wall 82 of the base body 80. The height of the connection groove 114 may be less than the height of the side wall 84. For example, the connection groove 114 may extend for a height between about 30% to about 70% of the height of the side wall 84. In one embodiment, the connection groove 114 may be located between the insert notch 104 and the rear end wall 90, and preferably between the pair of tool notches 110 in the side wall 84. In one embodiment, the connection groove 114 may extend between about 30% and about 70% of the length of the side wall 84. Other lengths of the connection groove 114 may be possible in alternative embodiments.

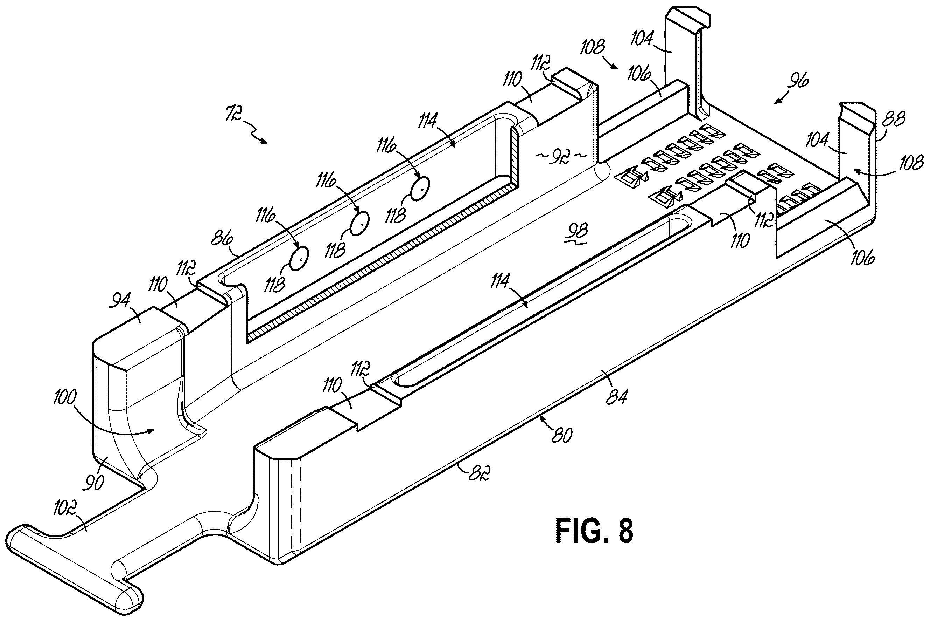

As noted above, the furcation housing components of the furcation housing 54 are configured to be connected through a releasable snap fit connection. As used herein, a releasable snap fit connection means that it takes a threshold force to connect two furcation housing components, and once two furcation housing components are connected, it takes a threshold force to separate the two components. This term encompasses not only the type of connections that, for example, overcome a biasing member (spring, elastic deformations, etc.) to snap open/closed, but also interference type of connections that rely on friction to hold two parts together and which must be overcome to release the two parts. In this regard, and as shown in Fig. 8, the connection groove 114 may include at least one snap fit feature 116 to secure another furcation housing component to the base 72 of the furcation housing 54. In one embodiment, the at least one snap fit feature 116 may include a projection, such as a rounded or spherical projection 118, extending from an interior wall that defines the connection groove 114 and into the opening of the groove 114. In one embodiment, the at least one snap fit feature 116 may include a plurality of discrete snap fit features 116 (e.g., three shown). The at least one snap fit feature 116 is configured to cooperate with a corresponding at least one snap fit feature on the other furcation housing component to connect the other furcation housing component to the base 72 in the snap fit connection, as will be described in more detail below.

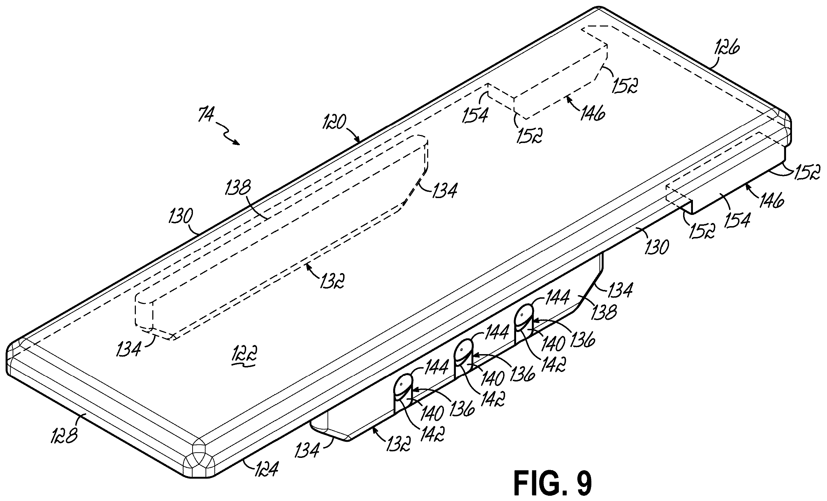

Turning to the lid 74 of the furcation housing 54 and as illustrated in Fig. 9, the lid 74 may include a generally planar lid body 120 defining an upper surface 122 and a bottom surface 124. In one embodiment, the lid body 120 may be generally rectangular and define a front edge 126, rear edge 128, and opposed side edges 130. Other shapes of the lid 74 are also possible, but the shape of the lid 74 may generally correspond to the shape of the base 72. In one embodiment, the lid 74 is configured to be releasably connected to the base 72 so as to close off the top 94 of the base 72 and form a generally closed furcation housing 54. As noted above, this may be achieved through a tool-less, snap fit connection. In this regard, the lid 74 may include a pair of connection tongues 132 extending from the bottom surface 124 of the lid body 120 which is configured to be received in respective connection grooves 114 in the side walls 84, 86 of the base 72. Each connection tongue 132 may be the same and a description of one connection tongue 132 will suffice as an adequate description of the other connection tongue 132.

In one embodiment, each connection tongue 132 may be generally rectangular in shape and have a length substantially equal to or slightly less than the length of the connection groove 114 in each of the side walls 84, 86 of the base 72. Each connection tongue 132 may similarly have a width that is substantially equal to or slightly less than the width of the connection groove 114. Lastly, each connection tongue 132 may have a height that is substantially equal to or slightly less than the height of the connection groove 114. In this way, when the lid 74 is aligned above the base 72 and moved downwardly, the connection tongues 132 on the lid 74 may be received in the connection grooves 114 in the side walls 84, 86 of the base 72 such that the bottom surface 124 of the lid 74 engages or nearly engages the top 94 of the sidewalls 84, 86. In one embodiment, each of the connection tongues 132 may include features to ease the insertion of the connection tongues 132 into the connection grooves 114. For example, each connection tongue 132 may include a chamfer 134 on the lower forward and/or rear corners of the tongues 132, as shown in Fig. 9. Moreover, the forward, rear and lower edges of the connection tongues 132 may be rounded or chamfered as well.

As mentioned above, the furcation housing components of the furcation housing 54 are configured to be connected through a snap fit connection. In this regard, each connection tongue 132 may include at least one snap fit feature 136 to secure another furcation housing component to the lid 76 of the furcation housing 54. In one embodiment, the at least one snap fit feature 136 may include a recess extending into an exterior wall that defines the connection tongue 132, such as an outwardly facing side wall 138 of the connection tongues 132. In one embodiment, the at least one snap fit feature 136 may include an inlet groove 140, a deflection element 142, and a projection seat 144. The inlet groove 140 is shaped so as to slidably receive the at least one snap fit feature 116 associated with the other furcation housing component, such as the rounded projection 118 of the base 72. The deflection element 142 projects from the inlet groove 140 and includes a ramp configured to engage the at least one snap fit feature 116 associated with the other furcation housing component. This engagement causes the connection tongues 132 to deflect and allow the at least one snap fit feature 116 to pass over the deflection element 142 and drop or snap into the projection seat 144. Once the at least one snap fit feature 136 associated with the lid 74 is engaged with the at least one snap fit feature 116 on the other furcation housing component, the lid 74 and other furcation housing component are connected, and a threshold force must be applied to again separate the lid 74 from the other furcation housing component. In one embodiment, the at least one snap fit feature 136 may include a plurality of discrete snap fit features 136 (e.g., the three shown).

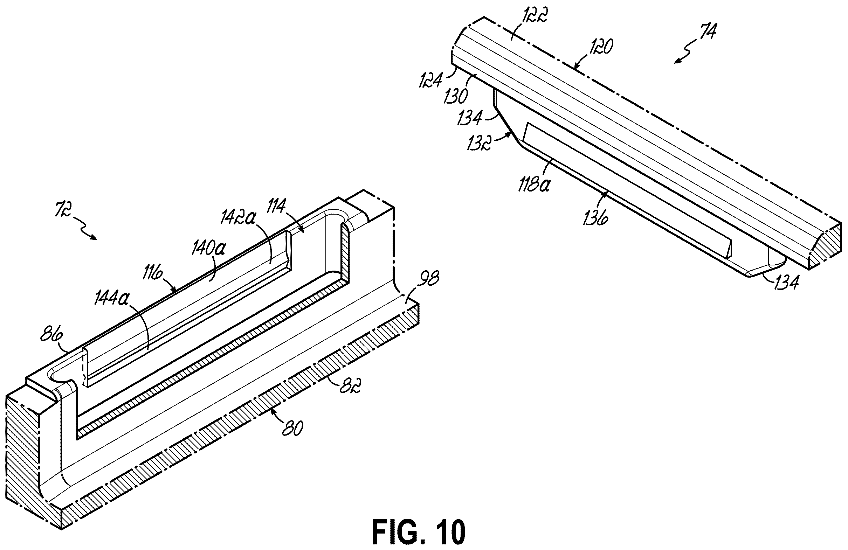

While the above illustrates the snap fit feature 116 as at least one projection 118 on the base 72 and the snap fit feature 136 as at least one recessed arrangement having an inlet groove 140, deflection element 142, and projection seat 144 on the lid 74, the snap fit features 116, 136 may have other configurations that achieve the snap fit connection. By way of example, and without limitation, Fig. 10 illustrates an alternative embodiment where the base 72 includes an elongated recess 140a in the connection groove 114 and the connection tongue 132 includes an elongated, outward facing tab 142a adjacent a lower end of the connection tongue 132. The connection groove 114 includes an inlet chamfer 144a that defines a raised portion 144b between the inlet chamfer 144a and the elongate recess 140a. As the lid 72 is moved toward the base 72, the connection tongue 132 is received in the connection groove 114 and the raised portion 144b causes the connection tongues 132 to deflect toward each other so that the tab 142b may pass over the raised portion 144b. When the tab 142b passes over the raised portion 144b, the tab 142 drops or snaps into the elongate recess 140a. Thus, once the at least one snap fit feature 136 associated with the lid 74 is engaged with the at least one snap fit feature 116 on the other furcation housing component, the lid 74 and other furcation housing component are connected, and a threshold force must be applied to again separate the lid 74 from the other furcation housing component.

In addition to the above, the lid 74 may include a pair of detents 146 extending from the bottom surface 124 of the lid body 120 and which are configured to be received in respective insert notches 104, and in particular the openings 108 of the insert notches 104, in the side walls 84, 86 of the base 72. Each detent 146 may be the same and a description of one detent 146 will suffice as an adequate description of the other detent 146. In one embodiment, each detent 146 may be generally rectangular in shape and have a length substantially equal to or slightly less than the length of the insert notch 104 in each of the side walls 84, 86. Each detent 146 may similarly have a width that is substantially equal to the width of the side walls 84, 86. Lastly, each detent 146 may have a height that is less than the height of the opening 108 in the insert notch 104.

In this way, when the lid 74 is aligned above the base 72 and moved downwardly, the detents 146 on the lid 74 are received in the openings 108 of the insert notches 104 of the side walls 84, 86 of the base 72 such that the bottom surface 124 of the lid 74 engages or nearly engages the top 94 of the sidewalls 84, 86 of the base 72. However, for reasons that will become clear below, there is a gap between the bottom surface 148 of the detents 146 and the upper edge of the rib 106 of the insert notch 104. In one embodiment, each of the detents 146 may include features to ease the insertion of the detents 146 into the openings 108 of the insert notches 104. For example, each detent 146 may include a chamfer 152 on the lower forward and/or rear ends of the detents 146. Moreover, at least one of the sides the detents 146, such as the outboard sides 154 of the detents 146, may include chamfers as well.

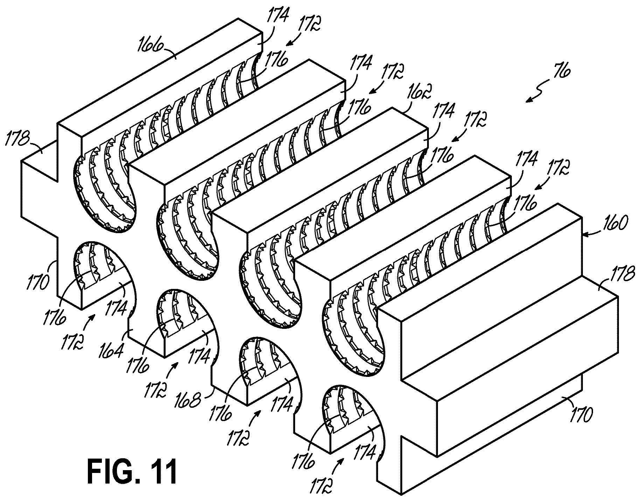

Turning to the at least one tube insert 76 of the furcation housing 54, and as illustrated in Fig. 11, the at least one tube insert 76 includes a generally rectangular (e.g., cuboid) insert body 160 having a front wall 162, a rear wall 164, top wall 166, bottom wall 168, and side walls 170. A plurality of bores 172 extend between the front wall 162 and the rear wall 164 and are configured to receive a respective one of the plurality of fanout tubes 56 therein. In one embodiment, each of the plurality of bores 172 includes a slot 174 that opens the lumen of the bores 172 to one of the walls of the tube insert 76 and the external environment of the tube insert 76. For example, some of the plurality of bores 172 may be open to the top wall 166 and the bottom wall 168 of the tube insert 76. The slots 174 allow the fanout tubes 56 and/or the optical fibers 52 of the fiber optic cable 46 to be inserted into the plurality of bores 172 via the slots 174 instead of having to thread the fanout tubes 56 and/or the optical fibers 52 through the plurality of bores 172 in the tube insert 76.

In addition, each of the plurality of bores 172 may include friction-enhancing elements 176 to increase a holding force on the plurality of fanout tubes 56 that are positioned within the plurality of bores 172. In one embodiment, for example, the friction-enhancing elements 176 may include a plurality of spikes extending from the wall of the bores 172 and into the lumen. The friction-enhancing elements 176 may, however, take on other forms, such as projections, surface roughness, friction pads, friction materials, etc., each configured to increase the frictional engagement between the plurality fanout tubes 56 and the plurality of bores 172. In one embodiment, the friction-enhancing elements 176 may be arranged in longitudinally spaced rings along the length of the plurality of bores 172. In an alternative embodiment, however, the friction-enhancing elements 176 may have other arrangements, including a random arrangement along the plurality of bores 172. In one embodiment, at least some of the friction-enhancing elements 176 may have an orientation that eases insertion of the plurality of fanout tubes 56 into the plurality of bores 172 but restrictions removal of the plurality of fanout tubes 56 from the plurality of bores 172.

In one embodiment, the plurality of bores 172 may be formed in the tube insert 76 in a two-dimensional array, i.e., have rows and columns of bores 172. However, to permit the plurality of bores 172 to be open to the one or more of the walls 166, 168 of the tube insert 76, the array should have no more than two rows of bores 172. By way of example, in one embodiment, the array may be configured to include a first row of multiple bores 172 adjacent to and open to the bottom wall 168 of the tube insert 76 and a second row of multiple bores 172 adjacent and open to the top wall 166 of the tube insert 76. In this regard, the plurality of bores 172 may be configured as a 2x2, 2x3, 2x4 or more array. It should be recognized that the plurality of bores 172 in tube insert 176 is not limited to a two-dimensional array having only two rows but may have any number of rows and columns as desired by the application (e.g., 3x2, 3x3, 4x2, 4x3, etc.). It should also be appreciated that the plurality of bores 172 in the tube insert 76 is not limited to having a two-dimensional array configuration and that other configurations remain possible within the scope of the disclosure.

Furthermore, the tube insert 76 may include at least one support rail 178 extending from the insert body 160 for supporting the tube insert 76 in the base 72 of the furcation housing 54. In one embodiment, the insert body 160 may include a support rail 178 projecting from each of the side walls 170 of the insert body 160. The support rails 178 may extend substantially the full length of the side walls 170 (e.g., from the front wall 162 to the rear wall 164) or only part of the length of the side walls 170 (not shown). The support rails 178 may be continuous or formed from discrete and spaced support rail sections (not shown) that collectively define the support rail 178. In one embodiment, the support rails 178 may be located along a mid-height region of the side walls 170, but may have different locations in alternative embodiments. Moreover, in one embodiment, the support rails 178 may have a generally rectangular shape, but other shapes may also possible. In one embodiment, the insert body 160 and the support rails 178 may be formed together as a monolithic body. For example, the tube insert 76 including the insert body 160 and the support rails 178 may be a molded plastic piece. In an alternate embodiment, however, the support rails 178 may be separately connected to the insert body 160, such as with adhesives or fasteners.

With the furcation housing components detailed above, use of the furcation housing 54 to form a furcation 50 in the fiber optic cable 46 will now be described. In this regard, the outer sheath 62 of the fiber optic cable 46 may be stripped to provide a working length of the plurality of optical fibers 52 carried in the fiber optic cable 46. The working length of the plurality of optical fibers 52 may be loose optical fibers or may be provided in the routable subunits 62 of the fiber optic cable 46 (see Fig. 4). In one embodiment, the subunit jackets 66 may be stripped to expose the plurality of optical fibers 52 carried in the routable subunits 62. Alternatively, the subunit jackets 66 may remain. The optical fibers 52 may be separated into a plurality of groups of optical fibers 52, which may be dictated by the routable subunits 62. Next, each group of optical fibers 52 may be inserted into a respective one of the plurality of bores 172 in the tube insert 76 via the slot 174 that is open to the outer surface of the tube insert 76, such as at the top and bottom walls 166, 168. The ends of the optical fibers 52 in each group may then be inserted into a respective one of the plurality of fanout tubes 56. Each of the plurality of fanout tubes 56 may then be inserted into a respective one of the plurality of bores 172 in the tube insert 76 via, for example, the front wall 162 of the tube insert 76. The friction-enhancing elements 176 in the plurality of bores 172 retain the plurality of fanout tubes 56 in engagement with the tube insert 76.

Next, the base 72 of the furcation housing 54 may be connected to the fiber optic cable 46. For example, the fiber optic cable 46 may be connected to the strain relief element 102 extending from the rear end wall 90 of the base 72. In this regard, various ties, tapes, bands, clips, clamps, etc. may be used to secure the fiber optic cable 46 to the strain relief element 102 and direct the fiber optic cable 46 so as to extend through the opening 100 in the rear end wall 90 and into the interior space 92 of the base 72, where the plurality of optical fibers 52 become separated into their respective groups. In one embodiment, the end of the outer sheath 62 is located within the interior space 92 of the base 72. In this way, the portion of the fiber optic cable 46 proximal of the furcation housing 54 already has a protective outer jacket, i.e., outer sheath 62, and heat shrink material (and the heat gun for use therewith) is not needed adjacent the ends of the furcation housing 54 to protect the optical fibers 52.

Following this, the tube insert 76 and the plurality of fanout tubes 56 extending from the front wall 162 of the tube insert 76 may be moveable (e.g., slidable) along the optical fibers 52 such that the tube insert 76 is able to be lowered into the interior space 92 of the base 72 from the top 94. More particularly, the tube insert 76 may be lowered into the interior space 92 of the base 72 such that the support rails 178 extending from the side walls 170 of the insert body 160 extend through the openings 108 of the insert notches 104 in the side walls 84, 86 and engage or nearly engage against the ribs 106 of the insert notches 104.

Next, the lid 74 may be connected to the base 72. In this regard, the lid 74 may be placed over top the base 72 such that the connection tongues 132 on the lid 74 are generally aligned with the connection grooves 114 on the base 72. As the lid 74 is lowered toward the base 72, the connection tongues 132 are received within the connection grooves 114 in the side walls 84, 86 of the base 72. Additionally, the detents 146 extending from the bottom surface 124 of the lid body 120 are received in the openings 108 of the insert notches 104 in the side walls 84, 86 of the base 72. As the lid 74 and base 72 are moved further toward each other, the snap fit feature 116 associated with the connection grooves 114 engage with the snap fit feature 136 associated with the connection tongues 132 and with a sufficient force connect the lid 74 to the base 72 in a snap fit manner. More particularly, in one embodiment, the rounded projections 118 associated with the connection grooves 114 engage the inlet grooves 140 on the connection tongues 132 as the lid 74 and base 72 are brought together. With further movement, the projections 118 engage with the deflection elements 142 causing the connection tongues 132 to elastically deflect inwardly toward each other. When the lid 74 and base 72 have been moved even closer, the projections 118 pass by the deflection elements 142 and the connection tongues 132 snap outwardly away from each other such that the projections 118 are positioned in their respective seats 144 to connect the lid 74 to the base 72.

When the lid 74 is releasably connected to the base 72, the detents 146 are received in the openings 108 of the insert notches 104 and may engage or trap the support rails 178 of the tube insert 76 between the ribs 108 of the insert notches 104 and the detents 146 on the lid 74. In other words, the tube insert 76 is clamped between the base 72 and the lid 74 such that the tube insert is substantially fixedly positioned (e.g., may be a small amount of play) in the interior space 92 of the base 72. The base 72 essentially closes off the slots 74 in the plurality of bores 172 that are open to the bottom wall 168 of the tube insert 76 (e.g., in the first row of bores), and the lid 74 essentially closes off the slots 74 in the plurality of bores 172 that are open to the top wall 166 of the tube insert 76 (e.g., in the second row of bores). In one embodiment, the portion of the base 72 that closes off the plurality of bores 172 may include one or more friction-enhancement elements 176, similar to those in the plurality of bores 172 in the tube insert 76, for increasing the hold on the fanout tubes 56 that are received in bores 172 in the first row. Similarly, the portion of the lid 74 that closes off the plurality of bores 172 may include one or more friction-enhancement elements 176 similar to those in the plurality of bores 172 in the tube insert 76 for increasing the hold on the fanout tubes 56 that are received in bores 172 in the second row.

In one embodiment, and as noted above, the lid 74 may be removable from the base 72 with the application of a force greater than a threshold force. For example, a technician may insert their finger or fingernail into the opening 112 that defines the at least one tool notch 110 and pull the lid 74 in an upwardly direction away from the base 72. Alternatively, a technician may insert a tool (e.g., flathead screwdriver) into the at least one tool notch 110 and pull or rotate the tool to move the lid 74 away from the base 72. In this regard, as the lid 74 is moved away from the base 72, the connection tongues 132 deflect inwardly toward each other to allow the projections 118 to move out of their respective seats 144 and down the deflection elements 142 where the connection tongues 132 snap outwardly away from each other. The snap fit features 116, 136 on the base 72 and lid 74, respectively, are now free of each other and the lid 74 may be disengaged from the base 72 with further movement away from each other. Thus, the furcation housing 54 may be "opened" back up so that technicians may perform various activities, such as various maintenance/repair activities.

For example, one benefit of the modular furcation housing 54 is that the entire furcation housing 54 or any of the furcation housing components of the furcation housing 54 may be replaced without having to sever or cut any of the optical fibers 52 of the fiber optic cable 46. Should, for example, the lid 74 be damaged, the lid 74 may be removed from the base 72 so as to easily come away from the optical fibers 52 and replaced. In another embodiment, should the base 72 be damaged or require a change out, the lid 74 may be removed from the base 72 as described above. The tube insert 76 may then be removed from the base 72 by pulling the tube insert 76 away from the insert notches 104 in the base 72. The connection between the strain-relief element 102 and the base 72 may be broken or removed such that the base 72 may be moved away from the optical fibers 52 of the fiber optic cable 46. A new base 72 may then be brought in and reconnected to the fiber optic cable 46 at the strain-relief element 102 as described above. The tube insert 76 may then be re-engaged with the base 72 at the insert notches 104. The lid 74 may then be re-engaged with the base 72 via the snap fit connection to complete the repair of the furcation housing 54.

In yet another embodiment, it is possible to change out the tube insert 76 of the furcation housing 54. In this regard, the lid 74 may be removed from the base 72 as described above. The tube insert 76 may then be removed from the base 72 by pulling the tube insert 76 away from the insert notches 104 in the base 72. The plurality of fanout tubes 56 may then be removed from their respective plurality of bores 172 by overcoming the frictional force holding the fanout tubes 56 within their bores 172. The optical fibers 52 in each of the plurality of bores 172 may be removed therefrom via the slots 174, thereby freeing the tube insert 76 from the optical fibers 52. A new tube insert 76 may then be provided. The groups of optical fibers 52 may then be re-inserted into their respective plurality of bores 172 in the tube insert 76 via the slots 124, and the plurality of fanout tubes 56 may be re-inserted into their respective plurality of bores 172 in the tube insert 76. The tube insert 76 may then be re-engaged with the base 72 at the insert notches 104. The lid 74 may then be re-engaged with the base 72 via the snap fit connection to complete the repair of the furcation housing 54.

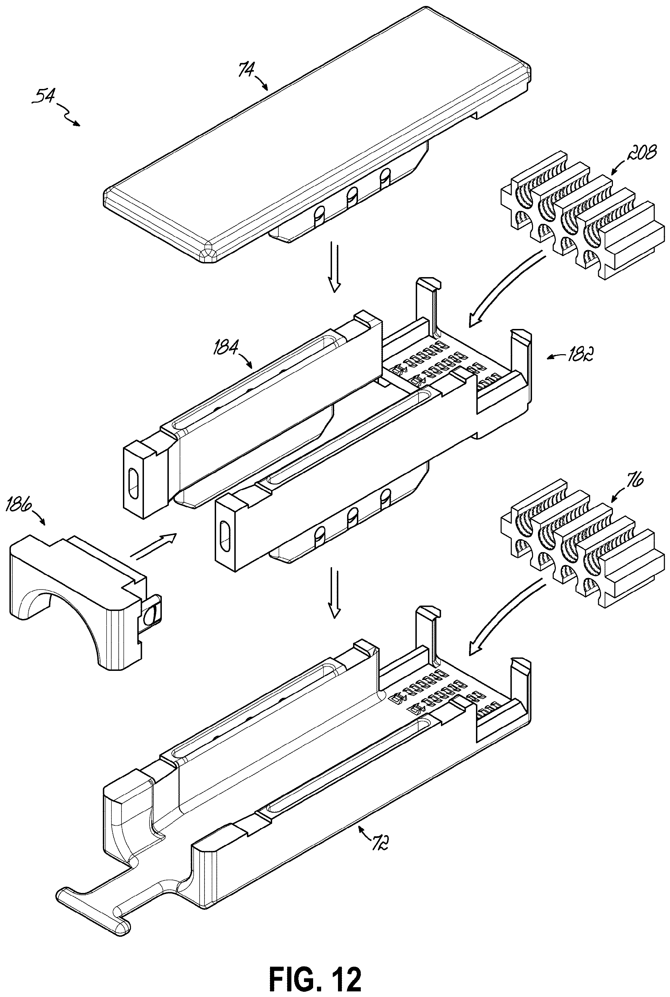

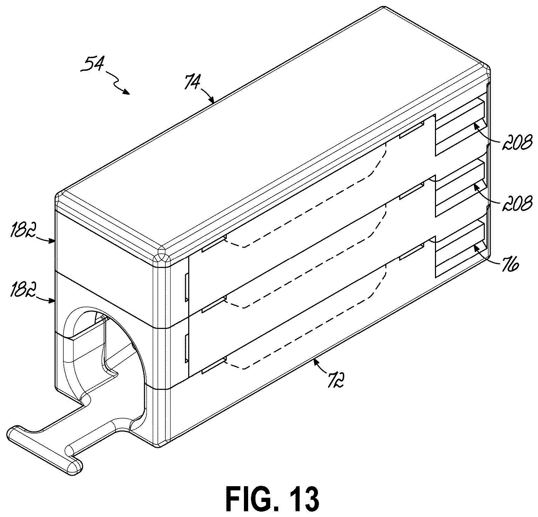

Thus, the modular nature of the furcation housing 54 may provide a number of benefits to the maintenance and repair of furcations 50 in fiber optic cable assemblies 44. However, the modular nature of the furcation housing 54 may provide additional benefits. For example, because the furcation housing 54 is formed from a number of furcation housing components, the furcation housing 54 may be scalable to accommodate an increased number of optical fibers 52 that need to be furcated in the furcation housing 54. As illustrated in Figs. 11 and 12, the scalability of the furcation housing 54 may be provided by the inclusion of at least one expansion module 182 disposed between the base 72 and the lid 74 in a stacked configuration. Fig. 12 illustrates one expansion module 182 disposed between the base 72 and the lid 74, and Fig. 13 illustrates two expansion modules 182 disposed between the base 72 and the lid 74. In other alternative embodiments, there may be more expansion modules 182 (e.g., 3, 4, 5 or more) provided in a stacked configuration between the base 72 and the lid 74. In an exemplary embodiment, each of the expansion modules 182 may have a similar construction and a description of one expansion module 182 will suffice as an adequate description for any additional expansion modules 182.

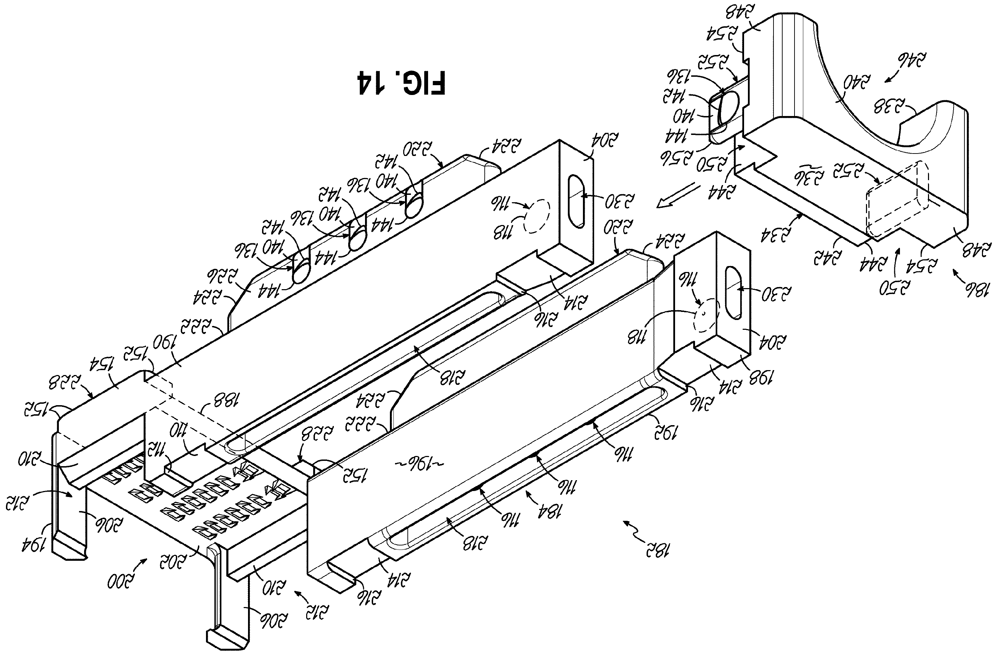

In one embodiment, and as illustrated in Fig. 14, an expansion module 182 may be formed from two furcation housing components including a module body 184 and a rear cap 186 releasably connectable to a rear of the module body 184 through, for example, a tool-less, snap fit connection. The module body 184 includes at least a bottom wall 188, a first side wall 190, a second side wall 192, and a front end wall 194 that generally define an interior space 196. The module body 184 is generally open along a top 198, which as explained below, is ultimately closed off by the lid 74. In one embodiment, the module body 184 may be generally rectangular in shape; however, that is merely exemplary and the module body 184 may have other shapes. In one embodiment, the front end wall 194 may include a generally U-shaped opening 200 that provides access to the interior space 196 of the module body 184 from a front of the expansion module 182. In one embodiment, the opening 200 may extend from an upper surface 202 of the bottom wall 188 to the top 198 so as to be open along the top 198 of the module body 184. Additionally, in one embodiment, the opening 200 may have a width that is substantially equal to the width of the interior space 196, i.e., the remaining portion of the front end wall 194 on opposed sides of the opening 200 may be approximately equal to the width of the side walls 190, 192. In an alternative embodiment, however, the opening 200 may have a width less than the width of the interior space 196. In another alternative embodiment, the height of the opening 200 may be less than the height of the side walls 190, 192. As will be described in more detail below, the opening 200 in the front end wall 194 makes the fanout tube receiving bores of another tube insert 76 accessible from the external environment of the furcation housing 54.

Turning now to the side walls 190, 192 of the module body 184, each of the side walls 190, 192 is substantially the same in its construction and thus a description of one of the side walls 190 will suffice as an adequate description of the other side wall 192. The side wall 190 may be generally solid with a width that may be generally constant or vary slightly along its length and extend generally from the front end wall 194 to a rear end 204 of the side wall 190. In one embodiment, a front end of the side walls 190, 192 may define the front end wall 194. The height of the side wall 190 may be generally constant but for some features that will be discussed in more detail below. The side wall 190 may include a generally U-shaped insert notch 206 adjacent the front end wall 194. As explained in more detail below, the insert notch 206 is configured to receive a portion of another at least one tube insert 208 and support the another at least one tube insert 208 within the interior space 196 of the expansion module 182 of the furcation housing 54.

Similar to the above, the insert notch 206 may include a rib 210 extending upwardly from the bottom wall 188 for a height less than the height of the side wall 190 and a U-shaped opening 212 that extends from the rib 210 to the top 198 so as to be open at the top 198 of the side wall 190. In one embodiment, the rib 210 may have a height less than half the height and preferably less than about a third of the height of the side wall 190. The rib 210 may also have a width less than the width of the side wall 190, though this is merely exemplary. Additionally, the opening 212 (and rib 210) may have a length less than the length of the furcation housing 54 and may generally correspond to the length of the tube insert 208. In various embodiments, for example, the length of the opening 212 of the insert notch 206 may be between about 10% and about 30% of the length of the furcation housing 54.

The side wall 190 may also include at least one tool notch 214 between the insert notch 206 and the rear end 204 of the side wall 190. The at least one tool notch 214 may include an opening 216 that is open to the top 198 of the side wall 190 and extends downwardly toward the bottom wall 188 a small amount, i.e., the height of the opening 216 is considerably less than the height of the side wall 190 (e.g., less than 10%). The at least one tool notch 214 is configured to receive a technician's finger or tool (not shown) that allows the technician to disassemble the furcation housing 54 (e.g., remove the expansion module 182 from the lid 74 or another expansion module 182). In one embodiment, the side wall 190 includes two tool notches 214, one adjacent the insert notch 206 and one adjacent the rear end 204 of the side wall 190. However, fewer or additional tool notches 214 may be formed in the side wall 190 as well.

Furthermore, the side wall 190 may include a connection groove 218 for connecting the expansion module 182 to another furcation housing component, such as another expansion module 182 or the lid 74 in a tool-less, snap fit manner. In one embodiment, the connection groove 218 is open to the top 198 of the side wall 190 and extends downwardly toward the bottom wall 188 of the module body 184. The height of the connection groove 218 may be less than the height of the side wall 190. For example, the connection groove 218 may extend for a height between about 30% to about 70% of the height of the side wall 190. In one embodiment, the connection groove 218 may be located between the insert notch 206 and the rear end 204 of the side wall 190, and preferably between the pair of tool notches 214 in the side wall 190. In one embodiment, the connection groove 218 may extend between about 30% and about 70% of the length of the side wall 190. Other lengths of the connection groove 218 may be possible in alternative embodiments.

Unlike the construction of the base 72, each of the side walls 190, 192 of the module body 184 of the expansion module 182 may also include a connection tongue 220 for connecting the expansion module 182 to another furcation housing component, such as another expansion module 182 or the base 72 in a tool-less, snap fit manner. In one embodiment, the extension tongues 220 extend from a bottom surface 222 of the side walls 190, 192. Each connection tongue 220 may be the same and a description of one connection tongue 220 will suffice as an adequate description of the other connection tongue 220.

In one embodiment, each connection tongue 220 may be generally rectangular in shape and have a length substantially equal to or slightly less than the length of the connection groove 114 in each of the side walls 84, 86 of the base 72 or the connection groove 218 in each of the side walls 190, 192 of an expansion module 182. Each connection tongue 220 may similarly have a width that is substantially equal to or slightly less than the width of the connection groove 114 and the width of the connection groove 218. Lastly, each connection tongue 220 may have a height that is substantially equal to or slightly less than the height of the connection groove 114 and the connection groove 218. In this way, when the expansion module 182 is aligned above the base 72 or another expansion module 182 and moved downwardly, the connection tongues 220 on the expansion module 182 may be received in the connection grooves 114 in the side walls 84, 86 of the base 72 or the connection grooves 218 in the side walls 190, 192 of another expansion module 182 such that the bottom surface 222 of the side walls 190, 192 engages or nearly engages the top 94 of the side walls 84, 86 of the base 72 or the top 198 of the side walls 190, 192 of another expansion module 182. In one embodiment, each of the connection tongues 220 may include features to ease the insertion of the connection tongues 220 into the connection grooves 114 and 218. For example, each connection tongue 218 may include a chamfer 224 on the lower forward and/or rear corners of the tongues 218. Moreover, the forward, rear and lower edges of the connection tongues 218 may be rounded or chamfered as well.

As noted above, the furcation housing components of the furcation housing 54 are configured to be connected through a releasable snap fit connection. In this regard, the connection groove 218 in the side walls 190, 192 of the expansion module 182 may include at least one snap fit feature 116 to secure another furcation housing component to the expansion module 182 of the furcation housing 54. In one embodiment, the at least one snap fit feature 116 may include a projection, such as a rounded or spherical projection 118, extending from an interior wall that defines the connection groove 218 and into the opening of the groove 218. In one embodiment, the at least one snap fit feature 116 may include a plurality of discrete snap fit features 116 (e.g., three shown). The at least one snap fit feature is configured to cooperate with a corresponding at least one snap fit feature on the other furcation housing component to connect the other furcation housing component to the expansion module 182.

In a similar manner, each connection tongue 220 may include at least one snap fit feature 136 to secure another furcation housing component to the expansion module 182 of the furcation housing 54. In one embodiment, the at least one snap fit feature 136 may include a recess extending into an exterior wall that defines the connection tongue 220, such as an outwardly facing side wall 226 of the connection tongues 220. In one embodiment, the at least one snap fit feature 136 may include an inlet groove 140, a deflection element 142, and a projection seat 144. The inlet groove 140 is shaped so as to slidably receive the at least one snap fit feature 116 associated with the other furcation housing component, such as the rounded projection 118 of the base 72. The deflection element 142 projects from the inlet groove 140 and includes a ramp configured to engage the at least one snap fit feature 116 associated with the other furcation housing component. This engagement causes the connection tongues 220 to deflect and allow the at least one snap fit feature 116 to pass over the deflection element 142 and drop or snap into the projection seat 144. Once the at least one snap fit feature 136 associated with the expansion module 182 is engaged with the at least one snap fit feature 116 on the other furcation housing component, the expansion module 182 and other furcation housing component are connected and a threshold force must be applied to again separate the expansion module 182 from the other furcation housing component. In one embodiment, the at least one snap fit feature 136 may include a plurality of discrete snap fit features 136 (e.g., the three shown).

In addition to the above, the module body 184 may include a pair of detents 228 extending from the bottom surface 222 of the side walls 190, 192 and which are configured to be received in respective insert notches 104, and in particular the openings 108 of the insert notches 104 in the side walls 84, 86 of the base 72. Alternatively, the detents 228 are configured to be received in respective insert notches 206 in the side walls 190, 192 of another expansion module 182. Each detent 228 may be the same and a description of one detent 228 will suffice as an adequate description of the other detent 228. In one embodiment, each detent 228 may be generally rectangular in shape and have a length substantially equal to or slightly less than the length of the insert notch 104 in each of the side walls 84, 86 of the base 72 and the insert notch 206 in each of the side walls 190, 192 of another expansion module 182. Each detent 228 may similarly have a width that is substantially equal to the width of the side walls 190, 192. Lastly, each detent 228 may have a height that is less than the height of the opening 108 in the insert notch 104 and the opening 212 in the insert notch 206.

In this way, when the expansion module 182 is aligned above the base 72 and moved downwardly, the detents 228 on the expansion module 182 are received in the openings 108 of the insert notches 104 of the side walls 84, 86 of the base 72 such that the bottom surface 222 of the expansion module 182 engages or nearly engages the top 198 of the sidewalls 84, 86 of the base 72. Alternatively, when the expansion module 182 is aligned above another expansion module 182 and moved downwardly, the detents 228 on the expansion module 182 are received in the openings 212 of the insert notches 206 of the side walls 190, 192 of the expansion module 182 such that the bottom surface 222 of the expansion module 182 engages or nearly engages the top 198 of the sidewalls 190, 192 of the other expansion module 182. In one embodiment, each of the detents 228 may include features to ease the insertion of the detents 228 into the openings 108 of the insert notches 104 and the openings 212 in the insert notches 206. For example, each detent 146 may include a chamfer 152 on the lower forward and/or rear ends of the detents 228. Moreover, at least one of the sides the detents 228, such as the outboard sides 154 of the detents 228, may include chamfers as well.

Furthermore, the side wall 190 may include a connection bore 230 for connecting the module body 184 to the rear cap 186 in a tool-less, snap fit manner. In one embodiment, the connection bore 230 is open to rear end 204 of the side wall 190 and extends inwardly toward the front end wall 194 of the module body 184. The length of the connection bore 230 may be less than the length of the side wall 190. For example, the connection bore 230 may extend for a length between about 5% to about 15% of the length of the side wall 190. In one embodiment, the connection bore 230 may be located centrally in the rear end 204 of the side wall 190. In one embodiment, the connection bore 230 may have a height between about 10% and about 50% of the height of the side wall 190. Other heights of the connection bore 230 may be possible in alternative embodiments.

As noted above, the expansion module components are configured to be connected through a releasable snap fit connection. In this regard, the connection bore 230 in the side walls 190, 192 of the module body 184 may include at least one snap fit feature 116 to secure the rear cap 186 to the module body 184. In one embodiment, the at least one snap fit feature 116 may include a projection, such as a rounded or spherical projection 118, extending from an interior wall that defines the connection bore 230 and into the opening of the bore 230. In one embodiment, the at least one snap fit feature 116 may include a plurality of discrete snap fit features 116. The at least one snap fit feature is configured to cooperate with a corresponding at least one snap fit feature on the rear cap 186 to connect the components of the expansion module 182.

Turning now to the rear cap 186, in one embodiment, the rear cap 186 includes a central body 234 having a top wall 236, a bottom wall 238, a front wall 240, a rear wall 242, and a pair of side walls 244. In one embodiment, an opening 246 may extend from the front wall 240 to the rear wall 242 and is open at the bottom wall 238 of the central body 234. As discussed in more detail below, the size of the opening 246 may vary depending on, for example, the size of the fiber optic cable 46 extending into the furcation housing 54 and the shape of the opening may vary. For example, in one embodiment, the opening 246 may be arcuate (e.g., circular) in shape. In an alternative embodiment, the opening 246 in the central body 234 may be omitted. A pair of cap flanges 248 extend from the side walls 244 of the central body 234 of the rear cap 186. In one embodiment, the flanges 248 may have a length that is less than a length of the side walls 244 of the central body 234 to define a notch or cutout 250 in the rear cap 186. In one embodiment, the height of the flanges 248 may be equal to or greater than a height of the side walls 244 of the central body 234 to which the flanges 238 are attached. Each of the flanges 248 includes a connection finger 252 extending from a rear surface 254 of the flanges 248 for connecting the rear cap 186 to the module body 184. Each connection finger 252 may be the same and a description of one connection finger 252 will suffice as an adequate description of the other connection finger 252.

In one embodiment, each connection finger 252 may be generally rectangular in shape and have a length substantially equal to or slightly less than the length of the connection bore 230 in each of the side walls 190, 192 of the module body 184. Each connection finger 252 may similarly have a width that is substantially equal to or slightly less than the width of the connection bore 230. Lastly, each connection finger 252 may have a height that is substantially equal to or slightly less than the height of the connection bore 230. In this way, when the rear cap 186 is aligned beside the module body 184 and moved forwardly, the connection fingers 252 on the rear cap 186 may be received in the connection bores 230 in the side walls 190, 192 of the module body 184. In one embodiment, each of the connection fingers 252 may include features to ease the insertion of the connection fingers 252 into the connection bores 230. For example, each connection finger 252 may include a chamfer 256 on the ends of the fingers 252. Moreover, the top and bottom edges of the connection fingers 252 may be rounded or chamfered as well.

Each connection finger 252 may include at least one snap fit feature 136 to secure the rear cap 186 to the module body 184 of the expansion module 182. In one embodiment, the at least one snap fit feature 136 may include a recess extending into an exterior wall that defines the finger 252, such as an outwardly facing side wall 258 of the connection fingers 252. In one embodiment, the at least one snap fit feature 136 may include an inlet groove 140, a deflection element 142, and a projection seat 144. The inlet groove 140 is shaped so as to slidably receive the at least one snap fit feature 116 associated with the module body 184. The deflection element 142 projects from the inlet groove 140 and includes a ramp configured to engage the at least one snap fit feature 116 associated with the module body 184. This engagement causes the connection fingers 252 to deflect and allow the at least one snap fit feature 116 to pass over the deflection element 142 and drop or snap into the projection seat 144. Once the at least one snap fit feature 136 associated with the rear cap 186 is engaged with the at least one snap fit feature 116 on the module body 184, the module body 184 and rear cap 186 are connected and a threshold force must be applied to again separate the rear cap 186 from the module body 184. In one embodiment, the at least one snap fit feature 136 may include a plurality of discrete snap fit features 136 (not shown).

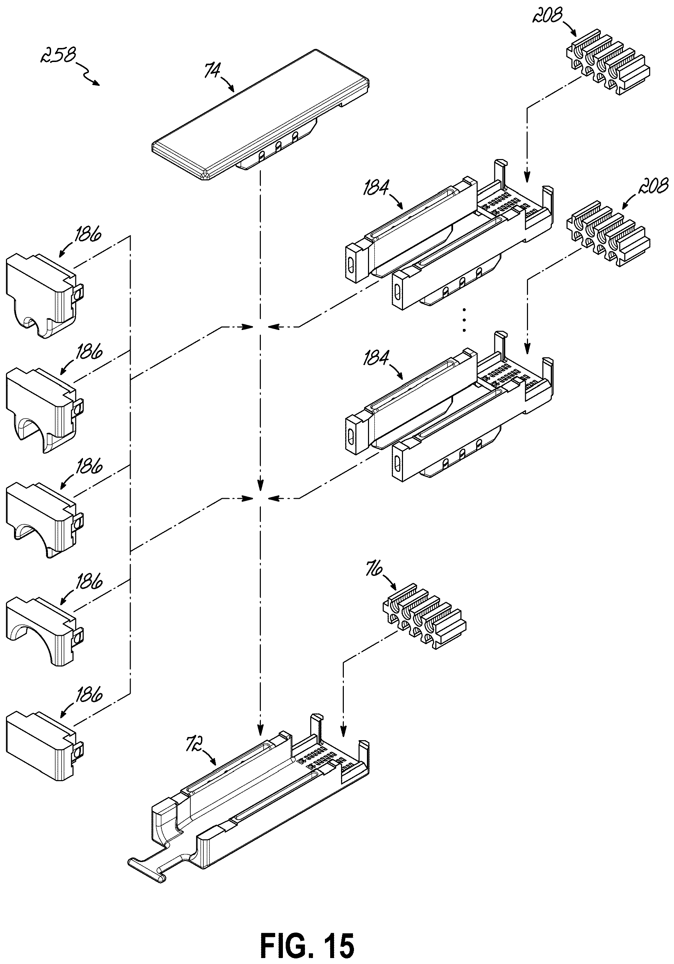

By forming the furcation housing 54 from a plurality of furcation housing components and by designing the furcation housing 54 to be scalable, a fewer number of furcation kits may be provided by manufacturers for covering the wide range of possibilities that technicians may experience in the field. Fig. 15, for example, illustrates a furcation kit 264 having a plurality of modular furcation housing components that may be used to form a wide variety of furcation housings 54, including furcation housings 54 having different sizes and optical fiber capacities. In one embodiment, the furcation kit 264 may include at least one base 72, at least one lid 74, a plurality of expansion modules 182 (including a plurality of rear caps 186), and a plurality of tube inserts 76. In one embodiment, a plurality of bases 72 and a plurality of lids 74 may be provided in the furcation kit 264 such that a single kit may make more than one furcation housing 54. As shown in Fig. 15, a variety of rear caps 186 may be provided in the furcation kit 264. The different rear caps 186 may be configured to accommodate different sizes of the fiber optic cable 46 being received in the furcation housing 54. For example, the top rear cap 186 includes a very small opening 246 and the second, third, and fourth rear caps 186 have openings 246 that are progressively larger. The bottom rear cap 186 does not have an opening at all.

In addition, the furcation kit 264 may include a plurality of fanout tubes 56 for forming the breakout legs in the furcation 50. Moreover, the furcation kit 264 may include a plurality of fiber optic connectors 58, of which a wide variety may be provided in the furcation kit 264. Still further, the furcation kit 264 may include various ties, bands, clips, clamps, etc. for securing the fiber optic cable 46 to the furcation housing 54 at the strain relieve element 102. Other tools, sealants, etc. may also be provided in the furcation kit 264 as is known to those of ordinary skill in the telecommunications industry.

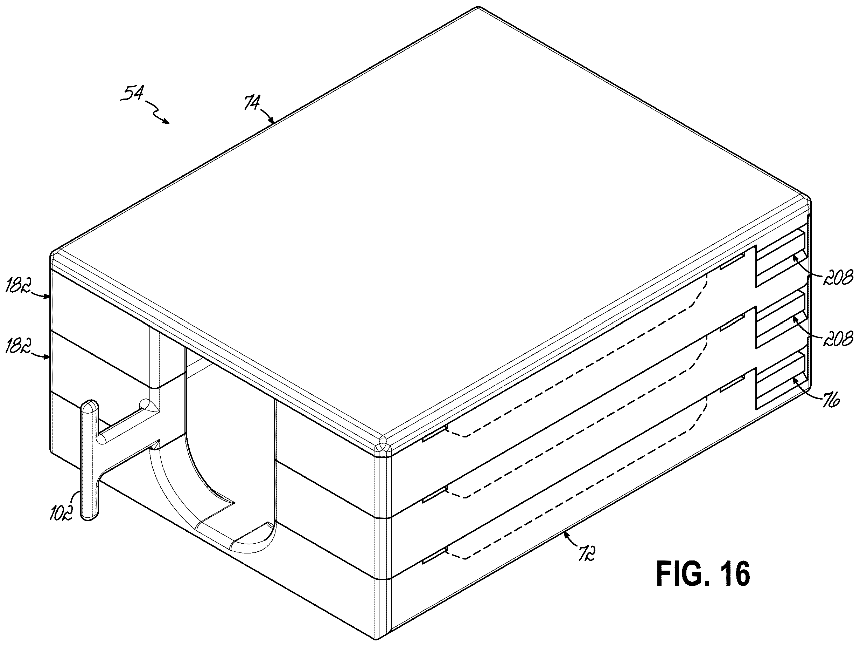

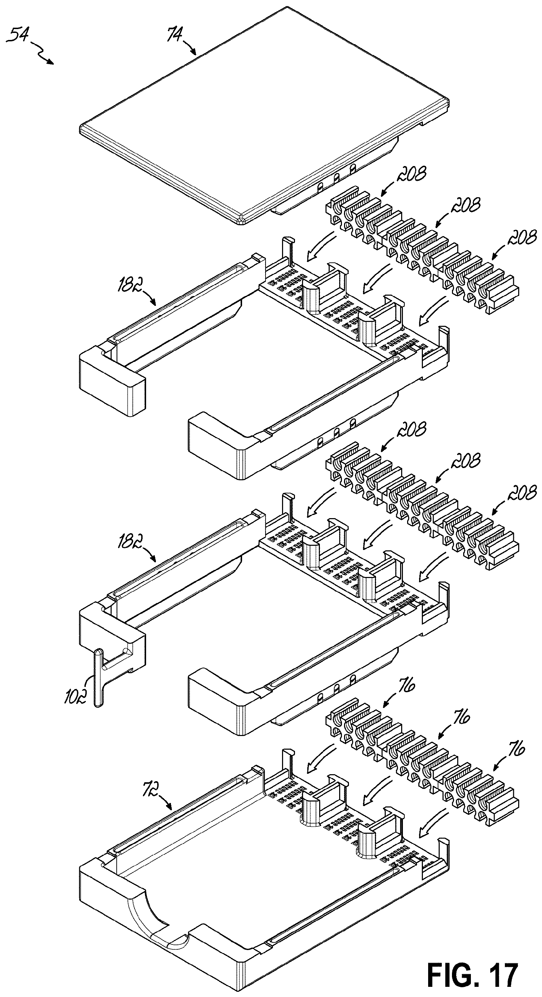

Figs. 16 and 17 illustrate a modular furcation housing 54 in accordance with another embodiment of the disclosure. These figures demonstrate that the size of the various furcation components may vary depending on the particular application. In this embodiment, for example, the width of the base 72, lid 74, and expansion modules 182 have been increased over that shown in the earlier figures. In this regard, the width of the furcation housing 54 may be configured to receive three tube inserts 76 at the front end of the furcation housing 54. Another difference from that shown in the earlier figures is that the strain-relief element 102 may be associated with one of the expansion modules 182 instead of the base module 72. Yet another difference is that the expansion module 182 does not have a separate rear cap. Instead, the rear end wall of the end cap is integrated with the remainder of the module body.

However, it should be appreciated that the methods of assembling the furcation housing 54 from the furcation housing components and the use of the furcation housing in forming the furcation 50 of a fiber optic cable assembly 44 are similar to that described above and would be readily understood by one of ordinary skill in the art. Thus, a further description of those uses will not be provided for the embodiment shown in these figures.

While in the above description, the modular housing was described in the context of a furcation housing 54, the modular aspects may be expanded to other types of furcated "housings" used in the telecommunications industry. By way of example, and without limitation, the modularity of the housing may be used in furcated splitter assemblies or in furcated wavelength division multiplexing (WDM) assemblies. Additionally, the modular aspects of the housing disclosed herein may be beneficial to mechanical splice bodies and adapter panels. In this regard, the interior space of the modular housing may be used to receive various devices (e.g., splitters, WDM devices, etc.) and protect those components while also dividing the optical fibers into breakout legs. In another alternative embodiment, the tube insert could be modified to accept one or more adapters. Furthermore, a dual ended tube insert could be created to merge two bodies to create a pass-through body which could be used for splicing or other branching or consolidation processes. In yet another alternative, while the above used a snap fit connection between the plurality of housing components, other types of latching or connection arrangements may be possible. For example, adjacent housing components may be configured to slidably engage each other to form a connection between the adjacent housing components.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Thus, it should be evident that departures may be made from such details without departing from the scope of the disclosure.

## Claims

1. A furcation housing for forming a furcation in a fiber optic cable carrying a plurality of optical fibers, the furcation housing having a modular construction comprising a plurality of separate furcation housing components releasably connectable to form the furcation housing, wherein at least two of the plurality of furcation housing components connect to each other through a snap fit connection.

2. The furcation housing of claim 1, wherein the plurality of furcation housing components comprises:
a base having an inlet for receiving the fiber optic cable, an exit for receiving a plurality of fanout tubes configured to receive the optical fibers of the fiber optic cable, and an interior space between the inlet and exit; and
another furcation housing component of the plurality of furcation housing components releasably connectable to the base through the snap fit connection,
wherein the interior space of the base is externally accessible when the another furcation housing component is disengaged from the base.

3. The furcation housing of claim 2, further comprising:
at least one tube insert positionable in the interior space of the base adjacent the exit and having a plurality of bores configured to receive a respective one of the plurality of fanout tubes;
wherein each of the plurality of bores includes a slot extending along a length of the bore to provide access to the bore from external the at least one tube insert.

4. The furcation housing of claim 3, wherein the plurality of bores is arranged in a rectangular array of no more than two rows, wherein when the tube insert is positioned in the interior space of the base, the base closes off the plurality of bores in a first row of the tube insert, and wherein when the another furcation housing component is connected to the base, the another furcation housing component closes off the plurality of bores in a second row of the tube insert.

5. The furcation housing of claim 3 or 4, wherein the at least one tube insert includes a pair of support rails for supporting the at least one tube insert on the base of the furcation housing.

6. The furcation housing of any of claims 2-5, wherein the another furcation housing component clamps the tube insert within the interior space of the base when the another furcation housing component is engaged with the base, and wherein the tube insert is removable from the interior space of the base when the another furcation housing component is disengaged from the base.

7. The furcation housing of any of claims 2-6, wherein the base comprises:
a bottom wall;
a rear end wall defining a rear opening for receiving at least a portion of the fiber optic cable;
a front end wall defining a front opening for receiving at least a portion of the plurality of furcation tubes; and
a pair of side walls extending between the front end wall and the rear end wall,
wherein each of the front end wall, rear end wall, and pair of side walls extends from the bottom wall to define the interior space.

8. The furcation housing of claim 7, wherein each of the pair of side walls includes an insert notch adjacent the front end wall, and wherein the insert notch is configured to receive a portion of the at least one tube insert for supporting the at least one tube insert on the base;
wherein the insert notch includes a rib extending from the bottom wall and an opening in the respective side wall above the rib and open to a top of the respective side wall.

9. The furcation housing of claim 7 or claim 8, wherein each of the pair of side walls includes a connection groove in the side wall and open to a top of the side wall;
wherein the connection groove includes at least one snap fit feature that forms part of the snap fit connection between the base and the another furcation housing component; and
wherein the at least one snap fit feature associated with the connection groove includes a snap fit recess or a snap fit projection.

10. The furcation housing of any of claims 2-9, wherein the another furcation housing component includes a lid;
wherein the lid comprises:
a lid body defining a front edge, a rear edge, a pair of side edges, an upper surface, and a lower surface; and
a pair of connection tongues extending from the lower surface of the lid body and adjacent respective side edges of the lid body,
wherein the pair of connection tongues is configured to be received in respective connection grooves in the base.

11. The furcation housing of claim 10, wherein each of the pair of connection tongues includes at least one snap fit feature that forms part of the snap fit connection between the base and the lid;
wherein the at least one snap fit feature associated with the connection tongue includes a snap fit recess or a snap fit projection.

12. The furcation housing of any of claims 2-11, wherein the another furcation housing component includes at least one expansion module;
wherein the at least one expansion module comprises:
a bottom wall;
a rear end wall;
a front end wall; and
a pair of side walls extending between the front end wall and the rear end wall,
wherein the front end wall, rear end wall, and pair of side walls define an interior space.

13. The furcation housing of claim 12, wherein each of the pair of side walls includes an insert notch adjacent the front end wall, and wherein the insert notch is configured to receive a portion of the at least one tube insert for supporting the at least one tube insert on the base;
wherein the insert notch includes a rib extending from the bottom wall and an opening in the respective side wall above the rib and open to a top of the respective side wall.

14. The furcation housing of claim 12 or claim 13, wherein each of the pair of side walls includes a connection groove in the side wall and open to a top of the side wall;
wherein each of the pair of side walls includes a connection tongue extending from a bottom of the side wall; and
wherein each of the connection groove and the connection tongue includes at least one snap fit feature that forms part of the snap fit connection between the at least one expansion module and another furcation housing component; and
wherein the at least one snap fit feature associated with the connection groove includes a snap fit recess or a snap fit projection, and the at least one snap fit feature associated with the connection tongue includes the other of the snap fit recess of the snap fit projection.

15. The furcation housing of any of claims 12-14, wherein the expansion module comprises:
a module body that includes the bottom wall, front end wall and the two side walls; and
a rear cap releasably connected to the module body through a snap fit connection, the rear cap including the rear end wall.
